Europäisches Patentamt

European Patent Office

Office européen des brevets

(11) Veröffentlichungsnummer: **0 308 765**
**A1**

## EUROPÄISCHE PATENTANMELDUNG .

(21) Anmeldenummer: 88114896.9

(22) Anmeldetag: 12.09.88

(51) Int. Cl.4: **H02M 7/757**

(30) Priorität: 24.09.87 DE 3732228

(43) Veröffentlichungstag der Anmeldung:
29.03.89 Patentblatt 89/13

(84) Benannte Vertragsstaaten:
CH DE GB LI SE

(71) Anmelder: **Siemens Aktiengesellschaft Berlin und München**
**Wittelsbacherplatz 2**
**D-8000 München 2(DE)**

(72) Erfinder: **Neupauer, Helmut, Dr.**
**1.1. Neupauer, Elfriede Heiligenlohstrasse 3b**
**Verstorben(DE)**

(54) **Verfahren und Vorrichtung zur Bestimmung des Löschwinkelistwertes bei einem Wechselrichter.**

(57) Zur Bestimmung des Löschwinkels ($\gamma$) bei Wechselrichterventilen werden die aufgrund der Stromkommutierungen gegenüber den entsprechenden Grundschwingungsverläufen ($u_{RS}$ ...) in den Ventilspannungen ($u_{RS, Th}$, ...) auftretenden, pulsförmigen Abweichungen in Form von Spannungsblöcken ($|u_D|$) ausgeblendet. Für die Dauer des jeweiligen Löschwinkels wird ein binäres Meßsignal (LW) erzeugt, welches von einem Stromendeimpuls (IRE) ausgelöst und von einem Spannungsnulldurchgangsimpuls (URE) beendet wird. Der den Abschluß der jeweiligen Kommutierung anzeigende Stromendeimpuls (IRE) wird gebildet mit der Flanke am Ende ($\omega t_1$ bzw. $\omega t_2$) der durch die vorangegangene Kommutierung in der Ventilspannung ge-genüber dem Grundschwingungsverlauf hervorgerufenen Spannungsversetzung.

FIG 1

## Verfahren und Vorrichtung zur Bestimmung des Löschwinkelistwertes bei einem Wechselrichter

Die Erfindung betrifft ein Verfahren zur Bestimmung des Löschwinkels bei den Ventilen eines Wechselrichters, insbesondere in einer Anlage zur Hochspannungs-Gleichstromübertragung ("HGÜ"-Anlage), aus der Differenz zwischen dem Phasenwinkel eines Nulldurchganges der Ventilspannung und dem Phasenwinkel eines das Verlöschen des Stromes durch das entsprechende Ventil aufgrund einer vorgegangenen Stromkommutierung anzeigenden Stromendeimpulses. Ferner ist eine vorteilhafte Vorrichtung zur Durchführung des erfindungsgemäßen Verfahrens angegeben.

Ein Wechselrichter, der z.B. an einem Ende einer Anlage zur Hochspannungs-Gleichstromübertragung zur Energieeinspeisung in ein angrenzendes Wechselstromnetz dient, wird häufig zum Zwecke eines optimalen Wirkleistungstransportes bei minimalem Löschwinkel betrieben. Bekanntlich muß der auch als "Schonzeit" bezeichnete Löschwinkel stets größer sein als die bauelementespezifische "Freiwerdezeit" der im Wechselrichter verwendeten Thyristoren. Der minimale Löschwinkel ist dabei ein Maß für den Zeitraum, für den nach einer Stromunterbrechung eine negative Anoden-Kathoden-Spannung am betroffenen Thyristor anliegen muß, bevor dieser wieder mit einer positiven Sperrspannung beansprucht werden darf. Wird dieser minimale Löschwinkel eingehalten, so verbleibt der Thyristor im stromsperrenden Zustand und "kippt" nicht von selbst in den stromleitenden Zustand zurück.

Zur Anpassung an veränderte Betriebsbedingungen wird dieser minimal mögliche Wert des Löschwinkels häufig über eine sogenannte "Löschwinkelregelung" eingestellt. So ist z.B. in der DE-A1 33 40 540 ein Verfahren und eine Vorrichtung zum Betrieb einer Hochspannungsgleichstromübertragungsanlage angegeben, bei der die Anregelzeiten einer Löschwinkelregelung für den wechselspannungsseitigen Ausgang einer HGÜ-Fernübertragung insbesondere über eine Vorsteuerung stark verkürzt werden. Auf diese Weise ist ein kippsicherer Dauerbetrieb des Wechselrichters an der Wechselrichtertrittgrenze und gleichzeitig im Wirkungsgradoptimum möglich. Ferner wird in dem Aufsatz von R. Saupe in der Elektrotechnischen Zeitschrift ETZ, Band 102 (1981), Heft 1 auf den Seiten 14 bis 18, welcher auf die Patentanmeldung mit der Veröffentlichungsnummer DE-A1 30 07 221 zurückgeht, eine dort als "Schonzeitregelung" bezeichnete Vorrichtung zur optimalen Ausnutzung einer stromrichtergespeisten Synchronmaschine hinsichtlich Netz- und Maschinenleistungsfaktor beschrieben. Statt der Vorgabe eines konstanten und auf den Betriebspunkt mit dem größten zulässigen cos φ , d.h. bei maximalen Werten von Strom und Drehzahl, ausgelegten Schonzeitminimalwertes wird dieser nun so geregelt, daß auch bei starken, belastungsabhängigen Änderungen des Löschwinkelistwertes der Maschinenstromrichter immer an der Wechselrichtertrittgrenze bei optimalem cos φ arbeitet.

In diesem Fall wird zur Erfassung des Löschwinkelistwertes die für die Dauer der Schonzeit an jedem der Thyristoren anliegende negative Spannung "ausgeblendet", und ein deren Dauer anzeigendes binäres Signal über einen Integrierer mit nachgeschaltetem AbtastHalteglied digital-analoggewandelt. Wie aus einer in der DE 30 07 221 zusätzlich enthaltenen Vorrichtung zu entnehmen ist, werden dabei die an jedem einzelnen Thyristor auftretenden negativen Spannungen direkt erfaßt und deren Zeitdauern ausgewertet. Hierzu müssen bei einem sechspulsigen Wechselrichter an fünf Punkten Spannungen abgegriffen werden. Dies sind die drei Phasenspannungen am Wechselrichterausgang und die Zwischenkreisspannung am Wechselrichtereingang als Bezugspotentiale für die Phasenspannungen. Diese Methode der Bestimmung der Löschwinkelistwerte über die Direktauswertung der negativen Thyristorspannungen hat den Nachteil, das insbesondere zwei zusätzliche Gleichspannungswandler zur Erfassung der beiden als Bezugsgrößen dienenden Potentiale der Zwischenkreisspannung vorgesehen werden müssen. Insbesondere bei einem Wechselrichter, der in einer HGÜ-Anlage verwendet wird, ist aufgrund der hohen Gleichspannungen auf der Übertragungsstrecke der Einsatz von Gleichspannungswandlern an dieser Stelle sehr aufwendig. Zudem ist wegen der unvermeidlichen Meßungenauigkeiten von Gleichspannungswandlern die von einer Löschwinkelregelung geforderte Güte auf diese Weise häufig nicht zu erreichen, und damit auch keine ausreichende Sicherheit gegenüber unerwünschter Wechselrichterkippung gewährleistet.

Bei einer anderen bekannten Methode zur Bestimmung des Löschwinkelistwertes werden die Ströme und Spannungen der einzelnen Phasen erfaßt. Die steigende Flanke eines den Löschwinkel anzeigenden binären Signales wird dabei direkt über eine Strommessung durch ein Stromendesignal bei Löschen des Thyristorstromes, und dessen fallende Flanke mit dem über eine Spannungsmessung erfaßten darauffolgenden Nulldurchgang der Thyristorspannung gebildet. Auch in diesem Fall erhöhen die zusätzlich benötigten Wechselstromwandler die Meßungenauigkeit, insbesondere aufgrund der unvermeidlichen Phasendrehung der Wandlerausgangssignale gegenüber den Originalsignalen.

Der Erfindung liegt somit die Aufgabe zugrunde, ein Verfahren zur Bestimmung des Löschwinkelistwertes und eine Vorrichtung zur Durchführung des Verfahrens anzugeben, wobei außer den Spannungen auf der Wechselspannungsseite am Wechselrichterausgang keine weiteren Meßgrößen benötigt werden.

Die Aufgabe wird gelöst durch die kennzeichnenden Merkmale des Anspruchs 1. Eine vorteilhafte Vorrichtung zur Durchführung des Verfahren ist im Anspruch 4 angegeben. Die Unteransprüche enthalten weitere vorteilhafte Ausführungsformen.

Anhand der nachfolgend kurz angeführten Figuren wird die Erfindung des weiteren näher erläutert. Dabei zeigt:

FIG 1 Spannungs- und Stromverläufe zur Bildung eines den Löschwinkel anzeigenden binären Signales gemäß dem erfindungsgemäßen Verfahren,

FIG 2 eine vorteilhafte Ausführungsform der erfindungsgemäßen Vorrichtung zur Bildung des Löschwinkels bei einem sechspulsigen Wechselrichter,

FIG 3 eine weitere Ausführungsform der erfindungsgemäßen Vorrichtung für einen Wechselrichter mit zusätzlichem Stromrichtertransformator auf der Wechselspannungsseite,

FIG 4 eine weitere Ausführungsform der erfindungsgemäßen Vorrichtung für einen zwölfpulsigen Wechselrichter mit zusätzlichen Stromrichtertransformatoren auf der Wechselspannungsseite, und

FIG 5 eine vorteilhafte Ausführungsform für ein Filter zur Bestimmung des Verlaufes der Grundschwingungen.

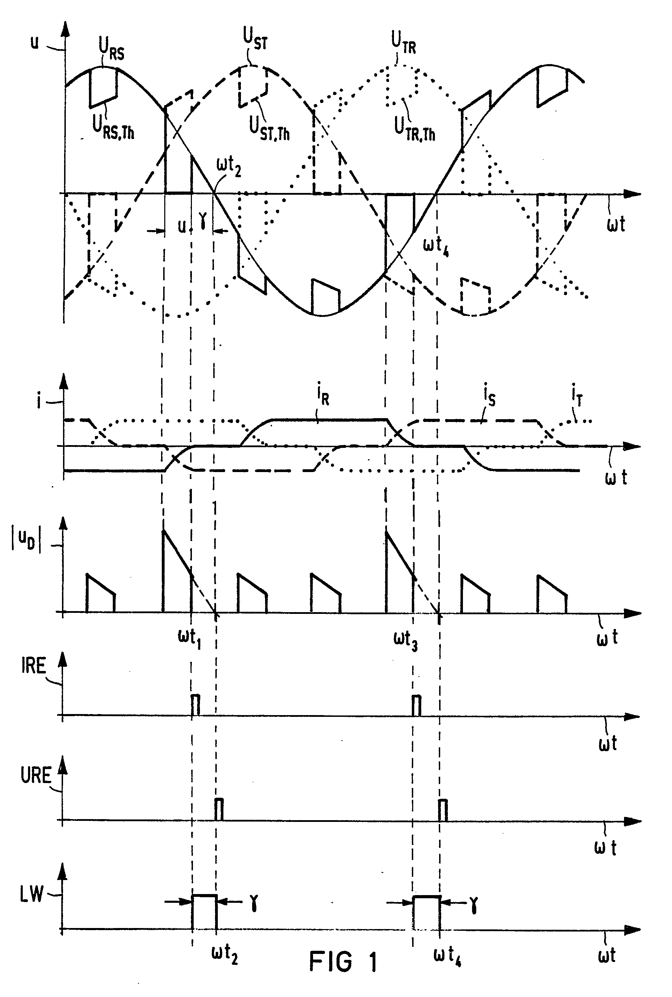

Anhand der Kurvenverläufe von FIG 1 wird das erfindungsgemäße Verfahren desweiteren näher erläutert. Als Ventilspannungen zur Erfassung des jeweiligen Löschwinkels dienen dabei beispielhaft die verketteten Spannungen, welche im oberen Teil der FIG 1 in Form der Spannungen $u_{RS}$, $u_{ST}$, $u_{TR}$ zwischen den Phasen eines dreiphasigen, sechspulsigen Wechselrichters dargestellt sind. Ohne Einschränkung können als Ventilspannungen auch die auf ein gemeinsames Potential bezogenen Phasenspannungen bzw. die unmittelbar an jedem einzelnen Ventil abgegriffenen Anoden-Kathoden-Spannungen dienen. Die Verwendung von verketteten Spannungen als Ventilspannung hat aber den besonderen Vorteil, das diese an einer beliebigen Stelle, insbesondere außerhalb des Wechselrichters am wechselspannungsseitigen Ausgang abgegriffen werden können. Bei einem dreiphasigen System werden hierzu lediglich drei Wechselspannungswandler benötigt. Es ist somit kein unmittelbarer Eingriff in den inneren Aufbau des Wechselrichters mehr notwendig, wie dies unter Umständen beim Direktabgriff der einzelnen Anoden-Kathoden-Spannungen der Fall ist. Da für das erfindungsgemäße Verfahren nicht mehr unbedingt Spannungen aus dem Wechselrichter selbst benötigt werden, so besteht z.B. bei der Verwendung von lichtzündbaren Thyristoren u.U. die Möglichkeit, auf das Herausführen solcher Signale vollkommen verzichten zu können.

Im Zusammenhang mit den in der FIG 1 ebenfalls dargestellten Verläufen der Phasenströme $i_R$, $i_S$, $i_T$ ist zu erkennen, daß sich jeder Kommutierungsvorgang, d.h. das gleichzeitige Abklingen und Ansteigen von zwei Phasenströmen aufgrund der vorübergehenden Stromführung zweier Ventile, im Verlauf einer jeden Spannung in Form einer vorübergehenden Spannungsabsenkung bzw. -erhöhung abbildet. Zur Erläuterung des Prinzips des erfindungsgemäßen Verfahrens ist es desweiteren ausreichend, die in der FIG 1 mit durchgezogener Strichführung dargestellten Verläufe der Spannungen $u_{RS}$, $u_{RS, Th}$ und des dazugehörigen Phasenstromes $i_R$ zu betrachten. Man erkennt, daß nur diejenigen pulsartigen Versetzungen im Verlauf der tatsächlichen Ventilspannung $u_{RS, Th}$ einem mit einem Verlöschen des Stromes $i_R$ verbundenen Kommutierungsvorgang zuzuordnen sind, und sich somit zur Auswertung des dazugehörigen Löschwinkels eignen, welche im Überlappungszeitraum u von dem mit dünner Linie dargestellten Grundschwingungsverlauf $u_{RS}$ auf den Wert Null springen. An allen übrigen, auf Zwischenwerte springenden Spannungsversetzungen sind die Ventile in den anderen Phasen des Wechselrichters beteiligt. So eignet sich zur Erfassung des Löschwinkels der beiden Ventile der hier betrachteten Phase R des als dreiphasig und sechspulsig angenommenen Wechselrichters jeweils der "dritte" Spannungseinbruch unmittelbar vor einem Nulldurchgang der Ventilspannung $u_{RS, Th}$.

Der in FIG 1 dargestellte Verlauf von $u_{RS, Th}$ enthält zwei derartige Spannungseinbrüche, deren Enden jeweils mit den Phasenwinkeln $\omega t_1$ bzw. $\omega t_3$ markiert sind. Die Flanken dieser pulsartigen Abweichungen der tatsächlichen Ventilspannung $u_{RS, Th}$ vom Grundschwingungsverlauf $u_{RS}$ entsprechen den Phasenwinkeln, in denen der dazugehörige Phasenstrom gerade beginnt abzunehmen bzw. erlischt. Bei Abschluß des jeweiligen Kommutierungsvorganges, d.h. bei Verlöschen des Stromes $i_R$ bei den Phasenwinkeln $t_1$ bzw. $\omega t_3$, springt die tatsächliche Ventilspannung $u_{RS, Th}$ wieder auf den vollen Wert des Grundschwingungsverlaufes $u_{RS}$. Nun liegt bis zum darauffolgenden Nulldurchgang der Ventilspannung bei den Phasenwinkeln $\omega t_2$ bzw. $\omega t_4$ für einen, dem zu bestimmenden Löschwinkel $\gamma$ entsprechenden Zeitraum eine negative Anoden Kathoden-Spannung am betroffenen Wechselrichterventil an. Der als "Löschwinkel" zu messende Winkelbereich $\gamma$ ist folglich durch die Differenz aus dem Phasenwinkel $\omega\, t_2$ bzw. $\omega\, t_4$ im Moment des Nulldurchganges der Ventilspannung $u_{RS,\,Th}$ und dem Phasenwinkel $\omega\, t_1$ bzw. $\omega\, t_3$ im Moment des Verlöschens des Stromes $i_R$ durch das jeweilige Ventil gegeben.

Gemäß der vorliegenden Erfindung wird nun das den Beginn des zu erfassenden Winkelbereiches $\gamma$ markierende "zu Null werden" des abkommutierten Phasenstromes angezeigt durch die Flanke am Ende der Abweichung der tatsächlichen Ventilspannung vom dazugehörigen Grundschwingungsverlauf. Ein solches Verfahren hat den besonderen Vorteil, das der Löschwinkelbeginn wesentlich genauer erfaßt werden kann, als dies z.B. bei einer direkten Auswertung des Phasenstromes über eine Strommessung möglich ist.

In der FIG 1 sind dementsprechend am Beispiel der verketteten Spannung zwischen den Phasen R und S eines dreiphasigen Wechselrichters die durch die Kommutierungen bedingten "Abweichungen" der tatsächlichen Ventilspannung $u_{RS,\,Th}$ vom dazugehörigen Grundschwingungsverlauf $u_{RS}$ "ausgeblendet". Von diesen sich aus dem Betrag der Differenz $u_D = u_{RS} - u_{RS,\,Th}$ ergebenden Spannungsblöcken $|u_D|$ ist die fallende Flanke am Ende des jeweils "dritten" Blockes als Markierung des dazugehörigen "Stromendes" in der betrachteten Phase geeignet. Diese zur Bestimmung des Startwinkels $\omega\, t_1$ bzw. $\omega\, t_3$ für die Löschwinkelmessung geeigneten Spannungsblöcke zeichnen sich zudem durch eine gegenüber den übrigen Spannungsblöcken erhöhte Anstiegsflanke aus.

In einer vorteilhaften Ausgestaltung der Erfindung wird ein binäres Meßsignal LW für die Dauer des zu erfassenden Löschwinkels $\gamma$ erzeugt. Dieses wird bevorzugt durch einen von der fallenden Flanke des Abweichungssignales $|u_D|$ beim Phasenwinkel $\omega\, t_1$ bzw. $\omega\, t_3$ getriggerten Stromendeimpuls IRE ausgelöst, und durch einen vom Nulldurchgang der Ventilspannung $u_{RS,\,Th}$ beim Phasenwinkel $\omega t_2$ bzw. $\omega\, t_4$ getriggerten Spannungsnulldurchgangsimpuls URE beendet. Die binären Signale IRE, URE und LW sind bereits in der FIG 1 dargestellt. Dabei ist das beim Phasenwinkel $\omega\, t_2$ bzw. $\omega$ $t_4$ beendete binäre Meßsignal LW ein Maß für den Löschwinkel des einen bzw. anderen Ventiles in der hier als Beispiel betrachteten Phase R eines als dreiphasig und sechspulsig angenommenen Wechselrichters. Ein solches Meßsignal kann z.B. nach einer Digital-Analog-Wandlung, insbesondere über einen Integrierer mit nachgeschaltetem Abtast-Halte-Glied besonders vorteilhaft einer Löschwinkelregelung als analoger Istwert zugeführt werden. Zur Verkleinerung der Totzeiten zwischen den Aktualisierungen eines solchen Istwertes ist es besonders vorteilhaft, wenn die Löschwinkel von allen Ventilen in allen Phasen eines Wechselrichters auf die erfindungsgemäße Weise erfaßt und bevorzugt über einen einzigen Analog-Digital-Wandler zu einem gemeinsamen Löschwinkelistwert verarbeitet werden.

Gemäß einer weiteren Ausgestaltung der Erfindung ist es auch denkbar, die Stromendeimpulse für die Ventile aller Wechselrichterphasen gemeinsam mit Hilfe einer einzigen Ventilspannung zu bilden. Wie bereits oben ausgeführt und aus der FIG 1 zu ersehen, bilden sich alle Kommutierungsvorgänge z.B. in der tatsächlichen Ventilspannung $u_{RS,\,Th}$ ab und bilden einen entsprechenden Spannungsblock $|u_D| = u_{RS,\,TR} - u_{RS}$.

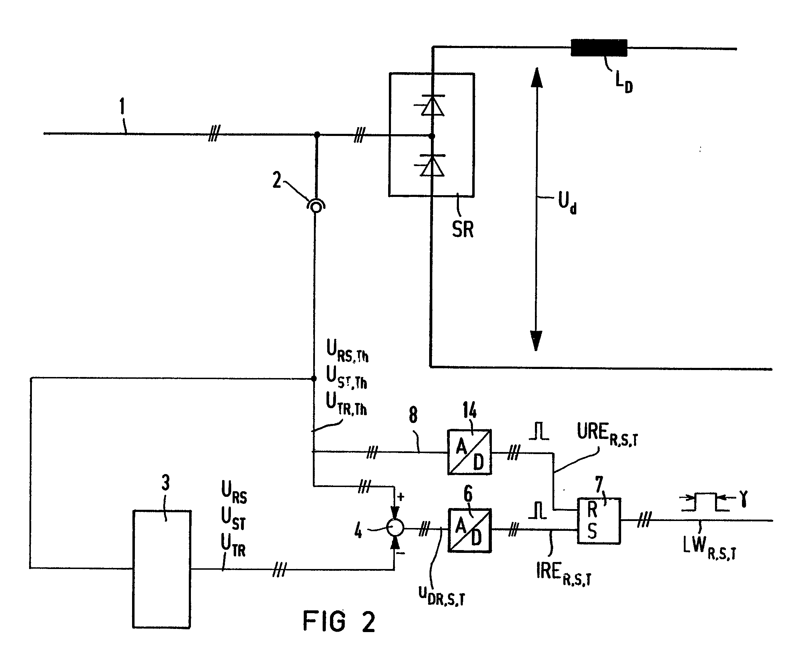

FIG 2 zeigt eine vorteilhafte Ausführungsform einer nach dem erfindungsgemäßen Verfahren arbeitenden Vorrichtung. Ein beispielsweise dreiphasiger und sechspulsiger Wechselrichter SR, von dem zur besseren Übersicht nur die Ventile einer Phase dargestellt sind, speist insbesondere als ein Teil einer HGÜ-Anlage aus einer Gleichspannung $U_D$ am Eingang ein Wechselspannungsnetz 1 am Ausgang. Ein erster Meßgeber 2 erfaßt gemäß der Erfindung bevorzugt mindestens eine der verketteten Spannungen $u_{RS,\,Th}$, $u_{ST,\,Th}$ und $u_{TR,\,Th}$ als Ventilspannungen. Diese werden einem Filter 3 und einer Subtraktionsschaltung 4 zugeführt. Das Filter 3 rekonstruiert aus den mit den Spannungsversetzungen behafteten tatsächlichen Ventilspannungen die dazugehörigen Grundschwingungsverläufe $u_{RS}$, $u_{ST}$, $u_{TR}$ und führt diese dem anderen Eingang des Subtraktionsgliedes 4 zu. An dessen Ausgang stehen somit bevorzugt für jede Phase getrennt die "Abweichungen" $u_{D,\,R}$, $u_{D,\,S}$, $u_{D,\,T}$ der jeweiligen Ventilspannungen von den dazugehörigen Grundschwingungsverläufen in Form der "ausgeblendeten" Spannungsblöcke $u_D$ an. Eine nachgeschaltete, erste Vorrichtung 6 zur Analog-Digital-Wandlung erkennt den zu einer Stromkommutierung in einer der Phasen gehörigen Spannungsblock und generiert an dessen Ende gleichzeitig mit der fallenden Flanke je einen den Abschluß der jeweiligen Kommutierung anzeigenden Stromendeimpuls $IRE_R$, $IRE_S$ und $IRE_T$. Die Erkennung des zu einer bestimmten Kommutierung in einer bestimmten Phase gehörigen Spannungsblockes aus den Blockfolgen $u_{D,\,R}$, $u_{D,\,S}$, $u_{D,\,T}$ kann besonders vorteilhaft über die Zündsignale der einzelnen Ventile erfolgen, welche bevorzugt der ersten Vorrichtung zur Analog-Digital-Wandlung 6 zusätzlich zugeführt werden.

Eine zweite Vorrichtung 14 zur Analog-Digital-Wandlung wertet über eine Signalleitung 18 die tatsächlichen Ventilspannungen aus und generiert bei jedem Nulldurchgang einen der jeweiligen Phase zugeordneten Spannungsnulldurchgangsimpuls $URE_R$, $URE_S$ und $URE_T$. Die Stromendeimpulse und die Spannungsnulldurchgangsimpulse einer jeden Phase dienen schließlich zur Ansteuerung eines binären Mittels 7, welches bevorzugt als ein dreiphasiges RS-Flip-Flop ausgeführt werden kann. Dabei ist der den jeweiligen Stromendeimpuls $IRE_{R, S, T}$ bereitstellende Ausgang der zweiten Vorrichtung 6 zur Analog-Digital-Wandlung auf einen der Setzeingänge, und der den jeweiligen Spannungsnulldurchgangsimpuls $URE_{R, S, T}$ bereitstellende Ausgang der ersten Vorrichtung zur Analog-Digital-Wandlung 6 auf den zugehörigen Rücksetzeingang führt. Am Ausgang des binären Mittels 7 entsteht auf diese Weise für die Dauer des Löschwinkels in der jeweiligen Phase je ein binäres Meßsignal $LW_R$, $LW_S$ und $LW_T$. Diese können bevorzugt über einen weiteren, nicht dargestellten Digital-Analog-Wandler zu einem gemeinsamen Löschwinkelistwert verarbeitet werden.

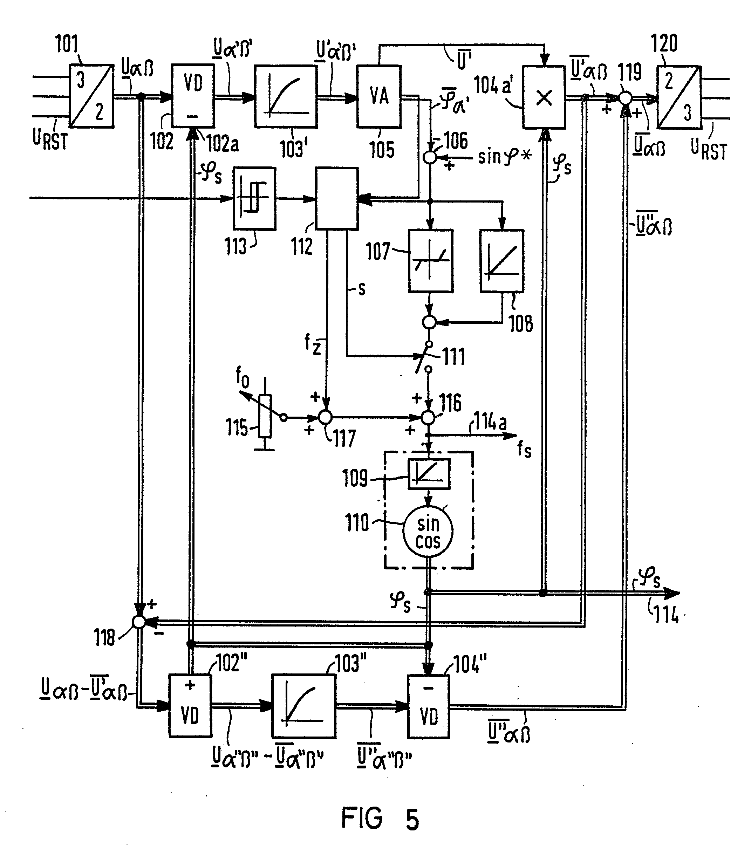

In der FIG 5 ist eine besonders vorteilhafte Ausführungsform für ein Filter 3 zur Bestimmung des Verlaufes der Grundschwingungen dargestellt. Ein Netzerfassungsglied 101 am Filtereingang erfaßt dabei die mit $U_{RST}$ bezeichneten und vom Meßgeber 2 in der FIG 2 bereitgestellten Ventilspannungen $u_{RS, Th}$ ... und wandelt diese in die Wechselspannungskomponenten eines ortogonalen, raumfesten Koordinatensystems um. Ein nachgeschalteter erster Vektordreher $102'$ transformiert diese raumfesten Komponenten in die Komponenten eines ortogonalen, rotierenden Bezugssystemes, dessen Transformationswinkel über einen zusätzlichen Winkeleingang 102a vorgegeben wird. Ein nachgeschaltetes erstes Glättungsglied $103'$ bildet hieraus wiederum weitere Komponenten, welche als "transformierte Mitsystemkomponenten" bezeichnet und einem nachgeschalteten Vektoranalysator 105 zugeführt werden. Dieser stellt an je einem Winkelsignal- und Betragsausgang einen Frequenz- und Amplitudenistwert zur Verfügung, wobei der Frequenzistwert dem Frequenzsteuereingang 116 eines aus einem Integrator 109 mit nachfolgendem Sinus-Cosinus-Geber 110 bestehenden Stellgliedes, und der Amplitudenwert einem Multiplizierer $104a'$ zugeführt wird. Zwischen Vektoranalysator 105 und Stellglied sind weitere Schaltungselemente angeordnet, welche bevorzugt aus einer von einem Netzwächter 113 betätigten Steuereinrichtung 112, einem Frequenzsollwertgeber 115 und einem von der Steuereinrichtung 112 betätigten Umschalter 111 bestehen. Der Netzwächter reagiert auf die kommutierungsbedingten Versetzungen in den Spannungen und interpretiert diese als eine "Netzstörung", so daß durch Öffnen des Schalters 111 über die Steuereinrichtung 112 die direkte Verbindung zwischen dem Winkelsignalausgang des Vektoranalysators 105 und dem Frequenzsteuereingang 116 des Stellgliedes unterbrochen und vorübergehend auf einen "gespeicherten Frequenzwert" umgeschaltet wird. Hierzu ist es besonders vorteilhaft, wenn der Netzwächter vom Signal am Ausgang der Subtraktionsschaltung 4 in FIG 2 angesteuert wird. Auf diese Weise können besonders vorteilhaft die in den tatsächlichen Ventilspannungen $u_{RS, Th}$ ... aufgrund der Stromkommutierung vorhandenen Spannungsversetzungen herausgefiltert und die netzsynchronen Grundschwingungen rekonstruiert werden. Schließlich wird der "gefilterte Frequenzwert" am Stellgliedausgang über den Multiplizierer $104a'$ mit dem Betragssignal des Vektoranalysators 105 zusammengefaßt und nach einer erneuten Wandlung im Element 120 in Form der Grundschwingungen am Ausgang des Filters 3 zur Verfügung gestellt. Der gefilterte Frequenzwert am Stellgliedausgang dient gleichzeitig als Transformationsfrequenz für den ersten Vektordreher $102'$ am Filtereingang.

Es ist besonders vorteilhaft, wenn mittels weiterer Elemente ein im allgemeinen auch in einer Grundschwingung enthaltenes Gegensystem bei deren Rekonstruktion mit berücksichtigt wird. Hierzu dienen die in der FIG 5 zusätzlich dargestellten Vektordreher $102''$, $104''$ und ein zweites Glättungsglied $103''$.

Die genaue Funktionsweise der in der FIG 5 dargestellten bevorzugten Ausführungsform des Filters 3 ist neben weiteren möglichen Schaltungsvarianten im Detail in der DE-OS 33 46 291 beschrieben. Die Schaltung wird dort ohne irgendwelche interne Veränderungen zur Bildung von "phasenrichtigen Referenzspannungen" verwendet, mit deren Hilfe nach Beendigung einer Netzstörung eine Anlage zur Hochspannungs-Gleichstromübertragung möglichst schnell netzsynchron wieder angefahren werden kann. Es ist nun von besonderem Vorteil, wenn diese unter Umständen in einem automatischen Wiederanfahrsystem einer HGÜ-Anlage bereits vorhandene Schaltung ohne irgendwelchen zusätzlichen Aufwand gleichzeitig als Filter für eine Vorrichtung zur Bestimmung des Löschwinkelistwertes gemäß der vorliegenden Erfindung mitverwendet werden kann.

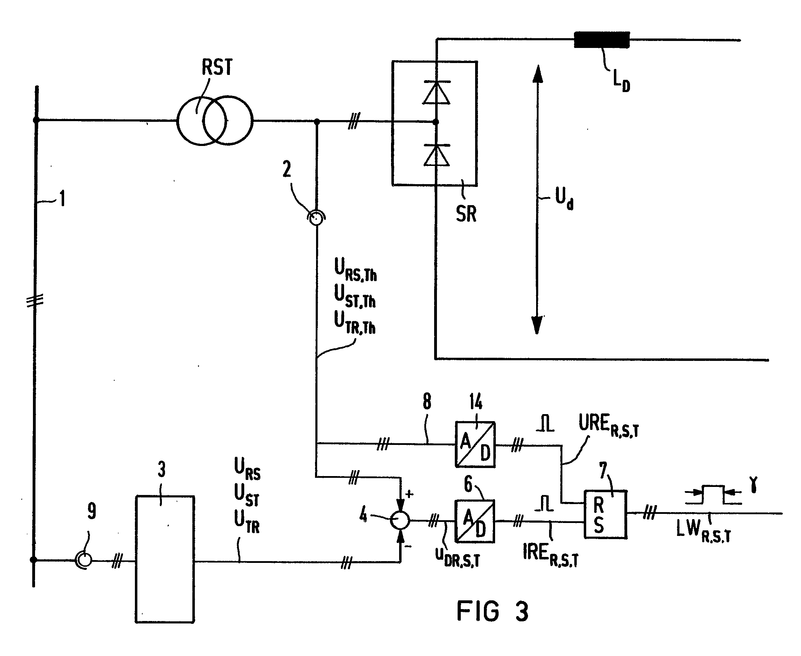

In der FIG 3 ist eine weitere vorteilhafte Ausführungsform der erfindungsgemäßen Vorrichtung dargestellt. Dabei ist der Wechselrichter SR über einen zusätzlichen Stromrichtertransformator SRT z.B. an einem als Sammelschiene ausgebildeten Teil des Netzes 1 angeschlossen. Eine solche Anordnung hat neben einer möglichen Anpassung der Höhe der Wechselrichterausgangsspannungen an die Netzspannungen den besonderen Vorteil, daß die durch die Kommutierungen hervorgerufenen Spannungsversetzungen in den Ventilspannungen nicht mehr direkt auf das Netz durchschlagen, sondern zum Teil über den Stromrichtertransformator geglättet werden. Bei einer solchen Anordnung kann das Filter 3 vorteilhaft über einen zweiten Meßgeber 9 auch direkt an der Sammelschiene angeschlossen werden, solange bevorzugt im Filter selbst das Übersetzungsverhältnis des Stromrichtertransformators mit berücksichtigt wird.

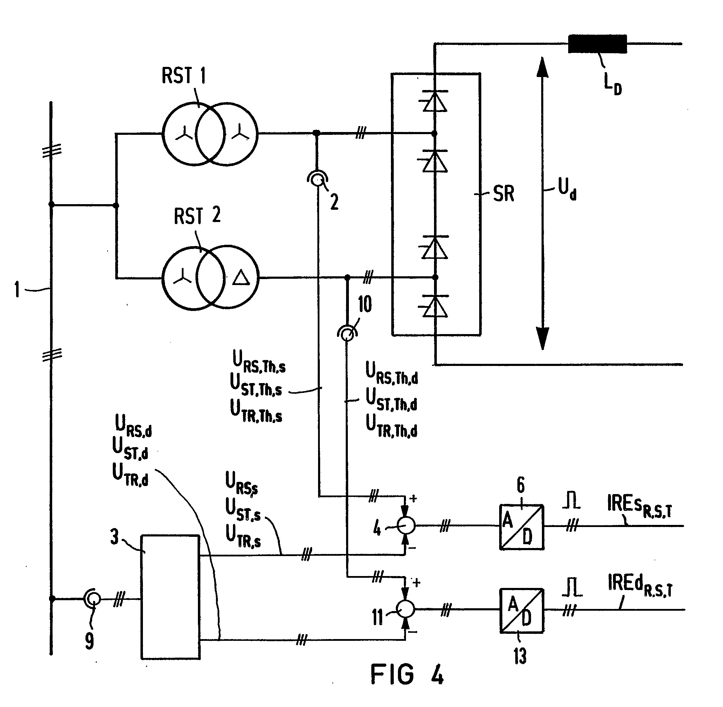

Schließlich ist in der FIG 4 eine weitere vorteilhafte Ausführungsform der erfindungsgemäßen Vorrichtung am Beispiel eines zwölfpulsigen Wechselrichters dargestellt. In einem solchen Fall speist jede Hälfte des Wechselrichters in der Regel einen eigenen Stromrichtertransformator, welche bevorzugt über unterschiedliche Wicklungssysteme auf der Unterspannungsseite mit den Ausgängen des Wechselrichters verbunden sind. So ist in der FIG 4 der erste bzw. zweite Stromrichtertransformator SRT1 bzw. SRT2 über ein stern- bzw. dreieckförmig geschaltetes Wicklungssystem s bzw. d mit dem entsprechenden Ausgang des Wechselrichters SR verbunden. Es ist besonders vorteilhaft, wenn in einem solchen Fall die vom oberen bzw. unteren Teil des Wechselrichters ausgegebenen Spannungssysteme zur Bildung eines Löschwinkelistwertes zunächst getrennt verarbeitet werden. Hierzu erfaßt im Beispiel der FIG 4 je ein Meßgeber 2 bzw. 10 die Ventilspannungen $u_{RS,\,Th,\,s}$, $u_{ST,\,Th,\,s}$, $u_{SR,\,Th,\,s}$ bzw. $u_{RS,\,Th,\,d}$, $u_{ST,\,Th,\,d}$, $u_{TR,\,Th,\,d}$. Aus diesen werden wiederum über zwei separate Subtraktionsglieder 4 bzw. 11 mit Hilfe der vom Filter 3 bereitgestellten Grundschwingungsverläufe $u_{RS,\,s}$, $u_{ST,\,s}$, $u_{TR,\,s}$ bzw. $u_{RS,\,d}$, $u_{ST,\,d}$, $u_{TR,\,d}$ die dazugehörigen Abweichungen $u_{D,\,s}$ bzw. $u_{D,\,d}$ ausgeblendet. Nach getrennter Analog-Digital-Wandlung in den Elementen 6 bzw. 13 stehen somit separat für jede Phase und für jedes der beiden Spannungssysteme am Wechselrichterausgang Stromendeimpulse $IREs_{R,\,S,\,T}$ bzw. $IREd_{R,\,S,\,T}$ zur Verfügung. Diese können in der bereits beschriebenen Weise mit Hilfe der Spannungsnulldurchgangsimpulse zu entsprechenden binären Meßsignalen $LWs_{R,\,S,\,T}$ bzw. $LWd_{R,\,S,\,T}$ verarbeitet werden. Die zur Bildung der Spannungsnulldurchgangsimpulse notwendigen Elemente sind in der FIG 4 zur besseren Übersicht nicht dargestellt.

**Ansprüche**

1. Verfahren zur Bestimmung des Löschwinkels ($\gamma$) bei den Ventilen eines Wechselrichters (SR), insbesondere in einer Anlage zur Hochspannungs-Gleichstromübertragung ("HGÜ"-Anlage), aus der Differenz zwischen dem Phasenwinkel ($\omega\,t_2$) eines Nulldurchganges der Ventilspannung und dem Phasenwinkel ($\omega\,t_1$) eines das Verlöschen des Stromes ($i_R$) durch das entsprechende Ventil aufgrund einer vorangegangenen Stromkommutierung anzeigenden Stromendeimpulses (IRE), **dadurch gekennzeichnet, daß** der Stromendeimpuls (IRE) mit dem Ende ($\omega t_1$) der für die Dauer der Kommutierung hervorgerufenen Abweichung ($u_D$) der Ventilspannung vom Verlauf der dazugehörigen Grundschwingung gebildet wird.

2. Verfahren nach Anspruch 1 mit einem mehrphasigen, insbesondere dreiphasigen Wechselrichter (SR) , **dadurch gekennzeichnet, daß** als Ventilspannung mindestens eine der verketteten Spannungen ($u_{RS,\,Th}$) am Wechselrichterausgang verwendet wird (FIG 1).

3. Verfahren nach Anspruch 2, **dadurch gekennzeichnet, daß** aus den an den einzelnen Ventilen in den jeweiligen Wechselrichterphasen gemessen Löschwinkeln ein gemeinsamer Löschwinkelistwert gebildet wird.

4. Vorrichtung zur Bildung eines den Löschwinkel bei den Ventilen eines Wechselrichters (SR) anzeigenden binären Meßsignales nach Anspruch 1, **gekennzeichnet** durch

    a) einen ersten Meßgeber (2) zur Erfassung der Ventilspannung,

    b) ein Filter (3) zur Bestimmung des Verlaufes der Grundschwingung der Ventilspannung,

    c) ein Subtraktionsglied (4) zur Bildung der Abweichung ($u_D$) der Ventilspannung vom dazugehörigen Grundschwindungsverlauf,

    d) ein erstes Mittel (6) zur Analog-Digital-Wandlung, welches aus der Abweichung ($u_D$) der Ventilspannung vom Grundschwingungsverlauf einen den Phasenwinkel ($\omega\,t_1$) im Moment des Verlöschens des Ventilstromes anzeigenden Stromendeimpuls (IRE) bildet,

    e) ein zweites Mittel (14) zur Analog-Digital-Wandlung, welches aus der Ventilspannung einen den Phasenwinkel ($\omega\,t_2$) im Moment des Nulldurchganges anzeigenden Spannungsnulldurchgangsimpuls (URE) bildet, und

    f) ein binäres Mittel (7), insbesondere ein RS-Flip-Flop, welches von einem Stromendeimpuls gesetzt und von einem Spannungsnulldurchgangsimpuls rückgesetzt wird, und für die Dauer des Löschwinkels ($\gamma$) ein binäres Meßsignal (LW) abgibt.

5. Vorrichtung nach Anspruch 4 mit einem über einen Stromrichtertransformator (SRT) an einer Sammelschiene (1) angeschlossenen Wechselrichter (SR), **dadurch gekennzeichnet, daß** das Filter (3) über einen zweiten Meßgeber (9) an der Sammelschiene (1) angeschlossen ist.

6. Vorrichtung nach Anspruch 4 mit einem mehrphasigen, insbesondere dreiphasigen Wechselrichter , **dadurch gekennzeichnet, daß** der erste Meßgeber (2) mindestens eine der verketteten Spannungen ($u_{RS,\,Th}$, $u_{ST,\,Th}$, $u_{TR,\,Th}$) am Ausgang des Wechselrichters als Ventilspannung erfaßt.

7. Vorrichtung nach Anspruch 5 mit einem mehrphasigen, insbesondere dreiphasigen Wechselrichter, **dadurch gekennzeichnet, daß**

a) der erste Meßgeber (2) mindestens eine der verketteten Spannungen am Ausgang des Wechselrichters als Ventilspannungen erfaßt, und

b) der zweite Meßgeber (9) mindestens eine der verketteten Spannungen an der Sammelschiene erfaßt.

8. Vorrichtung nach Anspruch 6 oder 7, **dadurch gekennzeichnet,** daß für die Dauer des Löschwinkels einer jeden Phase des Wechselrichters ein binäres Meßsignal ($LW_R$, $LW_S$, $LW_T$) gebildet wird.

9. Vorrichtung nach Anspruch 8, **dadurch gekennzeichnet,** daß aus den binäres Meßsignalen ein gemeinsamer Löschwinkelistwert gebildet wird.

10. Vorrichtung nach einem der vorangegangenen Ansprüche 6 bis 9, **gekennzeichnet** durch ein Filter (3) mit

a) einem Netzerfassungsglied (101) zur Transformation der Ventilspannungen ($u_{RS, TR}$, ...) in ein orthogonales, raumfestes Bezugssystem,

b) einem ersten Vektordreher (102'), welcher vom Netzerfassungsglied (101) angesteuert wird und die Komponenten des orthogonalen, raumfesten Bezugssystemes in ein orthogonales, rotierendes Bezugssystem transformiert,

c) einem Glättungsglied (103') für die Komponenten am Ausgang des ersten Vektordrehers (102'),

d) einem Vektoranalysator (105), welcher vom Glättungsglied (103') angesteuert wird und am Ausgang je ein Winkel- und Betrangssignal zur Verfügung stellt,

e) einen Netzwächter (113), der auf die von den Kommutierungen in den Ventilspannungen hervorgerufenen Spannungsversetzungen anspricht,

f) einem Stellglied aus einem Integrierer (109) mit nachgeschaltetem Sinus-Cosinus-Geber (110) für das Winkelsignal des Vektoranalysators (105),

g) einer Steuereinrichtung (112), welche vom Netzwächter (113) betätigt wird und einen Umschalter (111) so ansteuert, daß dem Stellglied ein gespeichertes Winkelsignal zugeführt wird,

h) einem Multiplizierer (104a') zur Zusammenfassung des Betragssignales des Vektoranalysators (105) mit dem Ausgangssignal des Stellgliedes, und

i) einem Wandler (120), welcher die Ausgangssignale des Multiplizierers in die Grundschwingungen ($u_{RS}$, ...) der Ventilspannungen zurücktransformiert (FIG 5).

FIG 1

FIG 2

$L_D$

$U_d$

SR

RST

$U_{RS,Th}$
$U_{ST,Th}$
$U_{TR,Th}$

2

1

9

3

$U_{RS}$
$U_{ST}$
$U_{TR}$

4

8

14  A/D

6  A/D

$U_{DR,S,T}$

$URE_{R,S,T}$

$IRE_{R,S,T}$

7  R
   S

Y

$LW_{R,S,T}$

FIG 3

FIG 4

EP 0 308 765 A1

EP 0 308 765 A1

FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | IEE PROCEEDINGS, Band 131, Nr. 5, September 1984, Seiten 197-203, Surrey, GB; J. ARRILLAGA et al.: "Microprocessor-controlled HVDC simulator" * Figuren 3,4 * | 1 | H 02 M 7/757 |
| A | US-A-3 771 041 (P. CHADWICK) * Zusammenfassung * | 1 | |
| A | IEE PROCEEDINGS, Band 131, Nr. 1, Januar 1984, Seiten 5-15, Surrey, GB; D. O'KELLY: "Voltage control for an HVDC convertor" | | |
| D,A | ETZ, Band 102, Nr. 1, 1981, Seiten 14-18, R. SAUPE: "Die drehzahlgeregelte Synchronmaschineoptimaler Leistungsfaktor durch Einsatz einer Schonzeitregelung" | | |
| D,A | DE-A-3 007 221 (R. SAUPE) | | **RECHERCHIERTE SACHGEBIETE (Int. Cl.4)** |
| A | EP-A-0 142 096 (H. NEUPAUER et al.) & DE-A-3 340 540 (Kat. D) | | H 02 M H 02 J |

Der vorliegende Recherchenbericht wurde für alle Patentansprüche erstellt

| Recherchenort | Abschlußdatum der Recherche | Prüfer |
|---|---|---|
| DEN HAAG | 07-12-1988 | MOUEZA, A.J.L. |

EPO FORM 1503 03.82 (P0403)